Europäisches Patentamt

European Patent Office

Office européen des brevets

(19)

(11) Veröffentlichungsnummer: **0 221 231 B1**

# EUROPÄISCHE PATENTSCHRIFT

(12)

(45) Veröffentlichungstag der Patentschrift: **10.07.91**

(51) Int. Cl.⁵: **B60T 15/02**

(21) Anmeldenummer: 86104769.4

(22) Anmeldetag: 08.04.86

(54) **Schaltventil mit keramischen Ventilelementen.**

(30) Priorität: 06.11.85 DE 3539317
06.11.85 DE 3539316

(43) Veröffentlichungstag der Anmeldung:
**13.05.87 Patentblatt 87/20**

(45) Bekanntmachung des Hinweises auf die
Patenterteilung:
**10.07.91 Patentblatt 91/28**

(84) Benannte Vertragsstaaten:
**AT DE FR GB IT SE**

(56) Entgegenhaltungen:
**DE-A- 3 137 774**
**US-A- 3 556 151**
**US-A- 4 448 215**

(73) Patentinhaber: **Armaturenfabrik Hermann
Voss GmbH & Co.**

**W-5272 Wipperfürth(DE)**

(72) Erfinder: **Rösch, Volker Dr.
Elsenborner Weg 37
W-4330 Mülheim/Ruhr(DE)**
Erfinder: **Geiger, Karl-Otto, Dipl.-Ing.
Seilerstrasse 40
W-5272 Wipperfürth(DE)**
Erfinder: **Hester, Hilma
Lüdenscheiderstrasse 61
W-5272 Wipperfürth(DE)**
Erfinder: **Prüfer, Joachim, Dipl.-Ing.
Baumbergerstrasse 104
W-5090 Leverkusen(DE)**
Erfinder: **Schultes, Karlheinz Dr.
Martin Luther Platz 17
W-5000 Köln 1(DE)**

(74) Vertreter: **Patentanwälte Dr. Solf & Zapf
Schlossbleiche 20 Postfach 13 01 13
W-5600 Wuppertal 1(DE)**

## Beschreibung

Die Erfindung betrifft ein Schaltventil, bestehend aus einem Gehäuse mit mindestens zwei Eingangs- bzw. Ausgangskanälen wobei in dem Gehäuse mindestens zwei scheibenförmige, mit Durchgangsöffnungen versehene, dichtend aufeinanderliegende, aus Keramik, Kunststoff oder einer Keramik-Kunststoff-Kombination bestehende Ventilelemente derart angeordnet sind, daß sie unter Vorspannung stehend aneinandergepreßt werden.

Derartige Schaltventile eignen sich als Absperrventile für beliebige pneumatische und/oder hydraulische Strömungsmedien. Die scheibenförmigen Keramik-Ventilelemente derartiger Ventile weisen extrem glatte Oberflächen auf, mit denen sie aufeinanderliegend in innigem Kontakt miteinander stehen. Hierdurch werden die Ventilelemente aufgrund von auftretenden Adhäsionskräften zusammengehalten, wodurch sich eine Dichtwirkung zwischen den Ventilelementen ergibt, diese aber dennoch gegeneinander verdrehbar und/oder verschiebbar sind.

Ein Schaltventil der eingangs beschriebenen Art ist aus der DE-A-3 137 774 bekannt, welches jedoch zur Steuerung von hydraulischen Medien eingesetzt wird. Im einzelnen beschreibt diese Druckschrift eine Dichtungsanordnung von Keramikventilgliedern insbesondere im Sanitärbereich, d.h. das bekannte Ventil wird zum Regeln von kaltem und warmem Wasser eingesetzt. Da Wasser in der Regel Kalk und auch oftmals Schmutzpartikel enthält, muß bei derartigen Sanitär-Armaturen sichergestellt werden, daß das Wasser nicht zwischen die Ventilelemente gelangen kann, damit nicht durch das Wasser zwischen den Ventilgliedern Schmutzpartikel und/ oder Kalk abgelagert und hierdurch die Dichtigkeit der Armatur bei längerer Benutzungsdauer beeinträchtigt wird. Dies wird im Falle des bekannten Ventils dadurch erreicht, daß die Ventilelemente mit einer Vorspannkraft aneinandergepreßt werden.

Es gibt nun aber auch weitere Anwendungsmöglichkeiten für derartige Schaltventile, und zwar insbesondere zur Steuerung von pneumatischen Bremsanlagen von Kraftfahrzeugen. Da in derartigen pneumatischen Bremssystemen Drücke von bis zu 20 bar auftreten können, muß hierbei die die Ventilelemente aneinanderpressende Vorspannkraft derart hoch sein, daß die Ventilelemente nicht auseinandergedrückt werden, wodurch eine ausreichende Abdichtung nicht mehr gewährleistet wäre. Andererseits würde aber nachteiligerweise eine hohe Vorspannkraft auch zu einer unerwünschten Schwergängigkeit des Ventils führen.

Der Erfindung liegt daher die Aufgabe zugrunde, ein Schaltventil zur Steuerung pneumatischer Bremsanlagen zu schaffen, welches unter allen vorkommenden Druckverhältnissen, auch bei eventuell in das Ventil eindringendem Schmutz, stets eine sichere, einwandfreie sowie leichtgängige Funktion gewährleistet.

Erfindungsgemäß wird dies dadurch erreicht, daß zwischen den mit der Vorspannkraft dichtend aufeinanderliegenden Ventilelementen eine Ausnehmung ausgebildet ist, die über einen Überströmkanal mit einem Zuluftkanal verbunden ist, so daß in der Ausnehmung ein gegenüber der Vorspannkraft größer bemessener Überdruck derart erzeugt wird, daß zwischen den aufeinanderliegenden Ventilelementen ein Gleitfilm aus Druckluft ausgebildet ist und am Umfangsrand der Ventilelemente der Druck im Gleitfilm auf Atmosphärendruck abgebaut ist.

Der erfindungsgemäße Gleitfilm aus Druckluft gewährleistet, daß eventuell im Leitungssystem befindliche Schmutzpartikel keinen schädlichen Einfluß ausüben können, und verhindert auch das Eindringen von beispielsweise Frostschutzflüssigkeit und dergleichen zwischen die Dichtflächen, so daß keine Veränderung der Verstellkräfte auftreten kann. Dabei beeinträchtigt der erfindungsgemäß vorgesehene Gleitfilm die Schaltfunktion des Ventils nicht, da die Dichtigkeit zwischen den Keramik-, Kunststoff- oder Keramik-Kunststoffscheiben nach wie vor gewährleistet ist. Somit wird durch die Erfindung eine Konstanz der Verstellkräfte auf niedrigem Niveau gewährleistet.

Vorteilhafte Ausgestaltungen der Erfindung sind in den Unteransprüchen 2 bis 33 enthalten.

Das Schaltverhalten des erfindungsgemäßen Ventils ist somit unabhängig von äußeren Belastungen bzw. Belastungsänderungen, so daß es genau und rückwirkungsfrei arbeitet. Durch die rückwirkungsfreie Arbeitsweise des erfindungsgemäßen Ventils kann erfindungsgemäß eines der Ventilelemente mit einem Kraftübertragungskörper form- und/oder kraftschlüssig verbunden werden, an den ein Antriebselement angreift. Damit wird eine unmittelbare Verbindung zwischen dem Antriebselement und dem Ventilbetätigungsorgan geschaffen. Durch diesen Ventilglied-Antrieb wird in vorteilhafter Weise ein sehr klein bauendes Ventil, insbesondere für den Einbau in Nutzfahrzeuge, geschaffen, das auch für hohe Beanspruchungen geeignet ist. Als Antriebe können zweckmäßigerweise die bekannten mechanischen Antriebe, z.B. Zahnstange-Schnecke, Exzenterscheibe-Kegelräder, Zahnstange-Stirnrad, Exzenterscheibe-Gelenkstange, Kurve-Stößel, Kipphebel und Magnet-Direktsteuerung, Kipphebel-Druckluftzylinder, Getriebe oder elektrische Antriebselemente, wie Elektromagnet, Gleichstrommotor oder pneumatische Antriebe eingesetzt werden.

Anhand der Zeichnungen, in denen mehrere Ausführungsbeispiele von erfindungsgemäßen Ventilen dargestellt sind, soll im folgenden die Erfindung näher erläutert werden.

Es zeigen:

Fig. 1     einen Längsschnitt einer ersten Ausführungsform eines Ventils nach der Erfindung,

Fig. 2     einen Schnitt längs der Linie II-II gemäß Fig. 1,

Fig. 3     einen Schnitt längs der Linie III-III gemäß Fig. 1,

Fig. 4     einen Schnitt längs der Linie IV-IV gemäß Fig. 1,

Fig. 5     zwei Beispiele für Profildichtungen im Schnitt,

Fig. 6     einen Längsschnitt einer zweiten Ausführungsform eines Ventils nach der Erfindung,

Fig. 7     eine Ausschnittvergrößerung des mit VII zeichneten Bereichs gemäß Fig. 6,

Fig. 8     einen Schnitt längs der Linie VIII-VIII gemäß Fig. 6,

Fig. 9     einen Schnitt längs der Linie IX-IX gemäß Fig. 6,

Fig. 10    eine Aufsicht auf eine weitere Ausführungsform eines erfindungsgemäßen Ventils,

Fig. 11    einen Schnitt längs der Linie XI-XI gemäß Fig. 10,

Fig. 12    einen Schnitt durch eine weitere Ausführungsform eines Ventils nach der Erfindung,

Fig. 13    eine Aufsicht auf das Ventil gemäß Fig. 12,

Fig. 14    eine Schnittansicht sowie eine Aufsicht eines weiteren gemäß der Erfindung ausgebildeten Ventils,

Fig. 15    einen Schnitt durch eine weitere Ausführungsform eines erfindungsgemäßen Ventils mit Längsschieber,

Fig. 16    ein Ventil ähnlich dem nach Fig. 15, jedoch mit einer alternativen Feststellung des Schiebers,

Fig. 17    einen Schnitt durch zwei aufeinanderliegende Ventilemente eines erfindungsgemäßen Schaltventils und

Fig. 18    eine Einzelheit gemäß XVIII in Fig. 17 in vergrößerter Darstellung.

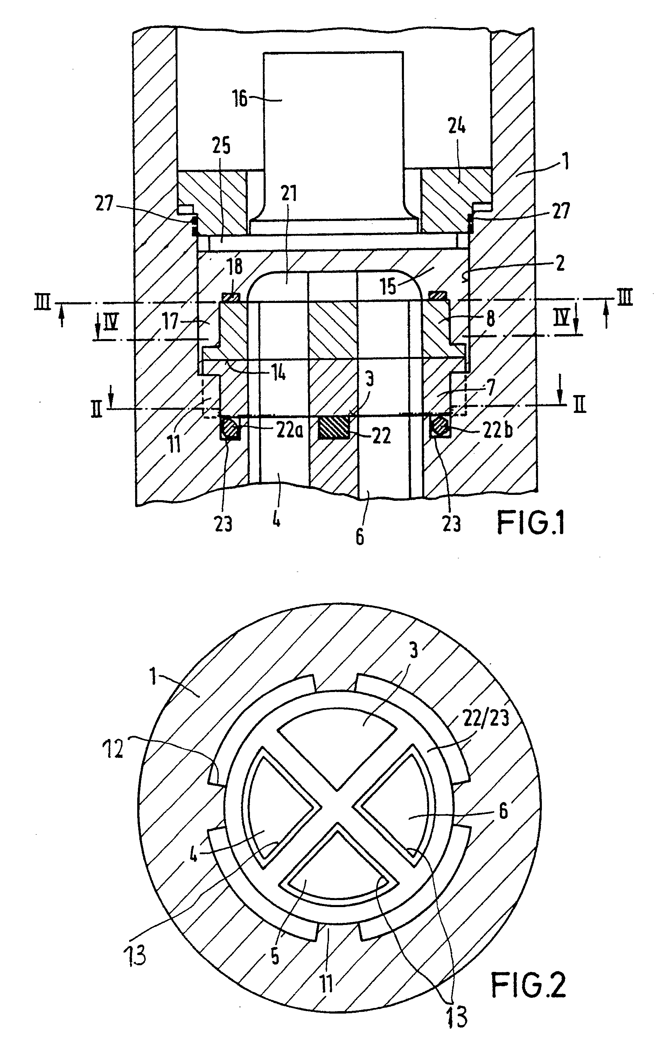

In Fig. 1 ist ein pneumatisches 3/2-Wegeventil mit einem zylindrischen Gehäuse 1 dargestellt. Innerhalb des Gehäuses 1, das aus Kunststoff oder Druckguß besteht, ist eine Längsbohrung 2 ausgebildet.

Wie insbesondere aus Fig. 2 zu erkennen ist, münden in die Bohrung 2 im Bereich ihres Bohrungsgrundes 3 drei Kanäle 4, 5, 6, die im dargestellten Beispiel den Querschnitt von Kreissegmenten aufweisen, jedoch auch mit anderem Querschnitt, wie z.B. kreisförmig, ausgebildet sein können. Die Kanäle 4, 5, 6 sind über nicht dargestellte Verbindungsleitungen in üblicher Weise mit einem Druckgeber, einem Druckmitteltank bzw. einem Verbraucher verbunden. Das Ventil dient nun dazu, den Verbraucher entweder mit dem Druckgeber oder dem Druckmitteltank zu verbinden.

Hierzu sind in der Bohrung 2 zwei scheibenförmige Ventilelemente 7, 8 angeordnet, die vorzugsweise aus Keramikmaterial bestehen. Jedoch kann auch ein geeigneter Kunststoff oder eine Keramik-Kunststoffkombination verwendet werden. Das dem Bohrungsgrund 3 der Bohrung 2 nächstliegende Ventilelement 7 ist verdrehsicher in dem Gehäuse 1 gelagert, wozu die Bohrung 2 radial nach innen gereichtete Vorsprünge 11 aufweist, die in Aussparungen 12 des Ventilelementes 7 eingreifen. Das Ventilelement 7 weist drei Durchgangsöffnungen 13 auf, die sich in Deckung mit den Öffnungen der Kanäle 4, 5, 6 befinden. Das Ventilmit diesem in direktem stirnseitigen Kontakt, wodurch sich aufgrund der äußerst glatten Oberflächen und der hierdurch auftretenden Adhäsionswirkung zwischen den Ventilelementen 7, 8 eine Dichtfläche 14 ergibt, ohne daß zusätzliche Dichtungen erforderlich wären. Das scheibenförmige Ventilelement 8 ist gegenüber dem Ventilelement 7 mittels eines Verdrehelementes 15 verdrehbar, wozu letzteres mit einem axial nach außen ragenden Betätigungsvierkant 16 verbunden ist. Das Verdrehelement 15 ist ebenso wie die Ventielemente 7, 8 im wesentlichen scheibenförmig ausgebildet. Zur formschlüssigen Verbindung mit dem Ventilelement 8 sind an dem Verdrehelement 15 Mitnehmernocken 17 ausgebildet, die sich vom Rand des Verdrehelementes 15 aus in axialer Richtung erstrecken und in Aussparungen 12 des Ventilelementes 8 eingreifen. Das vorzugsweise aus Kunststoff bestehende Verdrehelement 15 ist gegenüber dem Ventilelement 8 mittels einer in seiner Stirnfläche angeordneten O-Ringdichtung 18 abgedichtet.

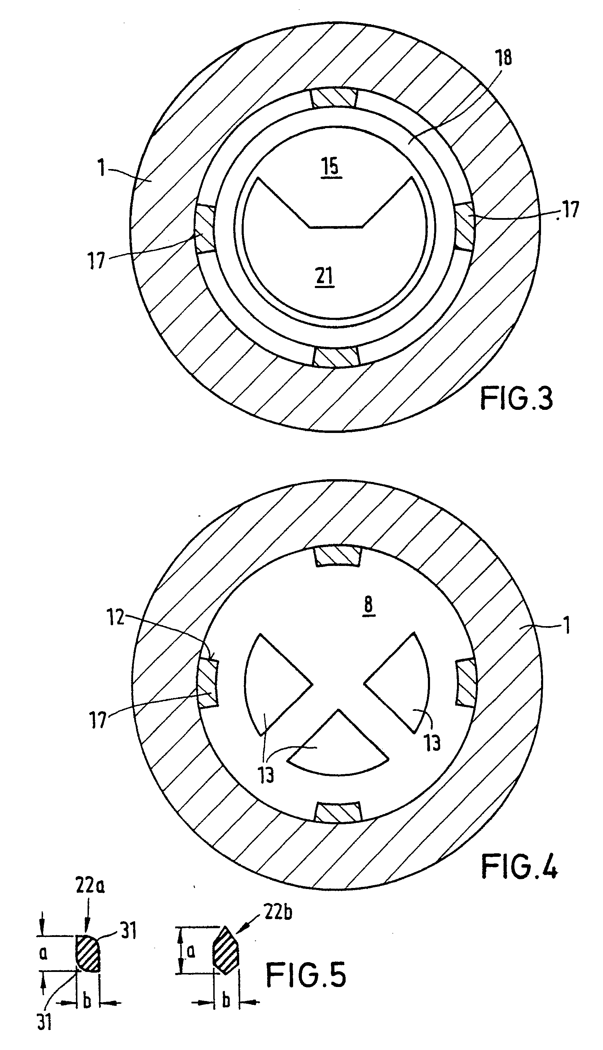

Wie aus Fig. 3 zu erkennen ist, ist in der dem Ventilelement 8 zugekehrten Fläche des Verdrehelementes 15 eine Umlenkvertiefung 21 ausgebildet, die vorzugsweise den Bereich von zwei Öffnungen 13 des Ventilelementes 8 überdeckt und so eine Verbindung von zwei Öffnungen 13 des Ventilelementes 8 bildet. Durch die gleichzeitige Drehung des Verdrehelementes 15 und des Ventilelementes 8 gegenüber dem feststehenden Ventilelement 7 können somit paarweise die Kanäle 4 und 5, 5 und 6 oder 4 und 6 miteinander verbunden werden.

Entgegen der Ausbildung des dargestellten Ausführungsbeispiels kann das verdrehbare Ventilelement 8 auch einstückig mit dem Verdrehelement 15 vorzugsweise aus Keramik ausgebildet sein, wodurch sich die O-Ringdichtung 18 erübrigen würde. Ebenfalls kann das Verdrehelement 15 selbst vorzugsweise aus Keramikmaterial hergestellt werden, so daß es unmittelbar auf dem ortsfesten Ventilelement 7 angeordnet werden könnte. In diesem Fall würde sich neben der O-Ringdichtung 18 auc da Ventilelement 8 erübrigen.

Damit nun bei hohen Luftdrücken von biz zu 20 bar die beiden Ventilelemente 7, 8 entgegen der Adhäsionskraft nicht auseinandergedrückt werden können und kein Schmutz zwischen die Dichtflächen 14 gelangen kann, ist erfindungsgemäß vorgesehen, die beiden Ventilelemente 7, 8 zur Gewährleistung eines "Null-Spaltes" unter Vorspannung gegeneinanderzuhalten.

Hierzu ist in dem Ausführungsbeispiel nach Fig. 1 bis 5 erfindungsgemäß im Bohrungsgrund 3 der Gehäusebohrung 2 eine Profildichtung 22 aus einem elastischen Material, z.B. Gummi, in einer Nut 23 angeordnet, wobei die Dichtung 22 im entspannten Zustand eine größere Höhe a als die Tiefe der Nut 23 aufweist. Die Ventilelemente 7, 8 werden über das Verdrehelement 15 mittels eines Druckringes 24 gegen die Dichtung 23 gepreßt, so daß diese unter die Ventilelemente 7, 8 zusammendrückender Vorspannung steht. Der Druckring 24 sitzt auf einem Absatz 25 des Vierkantes 16 am Verdrehelement 15 und wird bei der Montage des Ventils so weit in die Bohrung 2 gepreßt, bis die gewünschte Vorspannung erreicht ist. Nachfolgend wird der Druckring 24 im Ultraschall-Schweißverfahren mit dem Gehäuse 1 verschweißt. Es ergibt sich eine Schweißstelle 27.

In Fig. 5 sind zwei mögliche Querschnitte von Profildichtungen 22a, b dargestellt. Die Dichtung 22a ist im Querschnitt etwa rechteckig ausgebildet, wobei jedoch zwei diagonal gegenüberliegende Eckkanten 31 abgerundet sind. Die Dichtung 22 b weist den Querschnitt eines Sechsecks auf, das in Richtung einer durch zwei gegenüberliegende Eckkanten verlaufenden Linie langgestreckt ist, wobei diese Eckkanten abgeflacht sein können. Diese erfindungsgemäßen Ausgestaltungen der Profildichtungen 22a, b dienen dazu, daß die Vorspannung beim Zusammenpressen zunächst langsam, aber mit zunehmenden Preßdruck überproportional ansteigt. Dabei ist es vorteilhaft, wenn das Verhältnis von Höhe a zu Breite b etwa 2 zu 1 und das Verhältnis von Höhe a zur Tiefe der Nut 23 etwa 3 zu 2 beträgt.

Wie aus Fig. 2 zu erkennen ist, weist die Dichtung 22 zur Erzeugung einer möglichst gleichmäßig auf der Fläche verteilten Vorspannung erfindungsgemäß einen alle Öffnungen der Kanäle 4, 5, 6 gemeinsam umgebenden ringförmigen Teil sowie mit diesem einstückige, radial innen angeordnete, die Kanäle 4, 5, 6 einzelnen umgebende Teile auf, wobei die radial nach innen verlaufenden Teile der Profildichtung 22 gleichmäßig auf der Fläche des Bohrungsgrundes 3 verteilt angeordnet sind.

Für eine möglichst gute radiale Abdichtung zwischen dem Bohrungsgrund 3 und dem Ventilelement 7 ist es vorteilhaft, wenn die Profildichtung 22a - wie im linken Teil der Fig. 1 angedeutet - derart in der Nut 23 angeordnet ist, daß auf der oberen, offenen Seite der Nut 23 eine abgerundete Eckkante 31 des ringförmigen Teils der Profildichtung 22a auf der Innenseite der Nut 23 angeordnet ist.

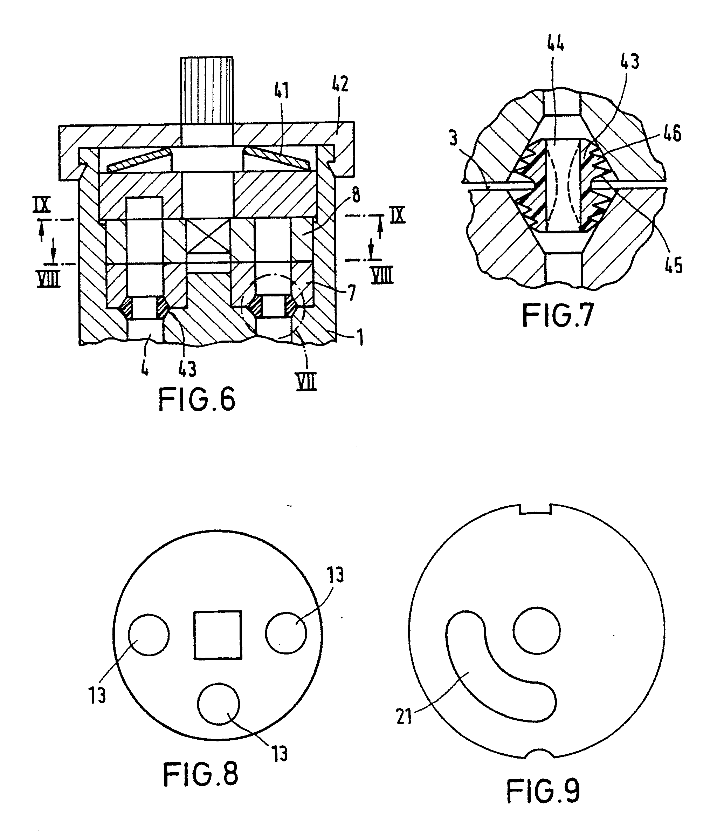

Bei der in Fig. 6 bis 9 dargestellten Ausführungsform eines erfindungsgemäßen Ventils sind zwei weitere vorteilhafte Möglichkeiten dargestellt, die beiden Ventilelemente 7, 8 unter Vorspannung zu setzen. Hierzu dient erfindungsgemäß eine Tellerfeder 41, die zwischen einem das Gehäuse 1 verschließenden Deckel 42 und den Ventilelementen angeordnet ist. Diese Tellerfeder 41 wird bei aufgesetztem Deckel 42 zusammengedrückt und gibt so eine Vorspannkraft an die Ventilelemente weiter.

Bei dieser Ausführungsform sind die Kanäle 4, 5, 6 sowie die Durchgangsöffnungen 13 der Ventilemente mit rundem Querschnitt ausgebildet. Daher ist es vorteilhaft, die Vorspannung durch doppelkonusförmige Dichtungen 43 aus einem elastischen Material, wie Gummi o. dgl., zu erzeugen. Die Dichtungen 43 (Fig. 7) weisen eine axiale Durchgangsöffnung 44 auf und sitzen mit jeweils einem Konus in den angesenkten Kanälen 4, 5, 6 des Gehäuses 1 und in den Öffnungen 13 des unteren Ventilelementes 7. Im mittleren Bereich des Umfangs weisen die Dichtungen 43 eine Einschnürung 45 auf, wodurch sich einerseits einprogressiver Anstieg der Vorspannung und andererseits auch eine Verringerung des Querschnitts der Durchgangsöffnung 44 bei zunehmender Zusammenpressung der Dichtungen 43 ergibt. Eine derartige Verringerung des Querschnitts der Durchgangsöffnung 44 dient als Drosselwirkung und ist besonders bei auftretenden Druckstößen von Vorteil (in Fig. 7 gestrichelt dargestellt).

Erfindungsgemäß weisen die doppelkonusförmigen Dichtungen 43 weiterhin auf den Umfangsflächen ihrer beiden Konusabschnitte umlaufende, sich radial erstreckende Zungen 46 auf, die einerseits zum Ausgleich von Fertigungstoleranzen dienen und die andererseits zum progressiven Anstieg der Vorspannkraft beitragen.

Die Tellerfeder 41 und die Dichtungen 43 können alternativ oder auch gleichzeitig vorgesehen werden. In dem Fall, daß ausschließlich die doppelkonusförmigen Dichtungen 43 verwendet werden sollen, muß anstelle der Tellerfeder 41 ein passender Zwischenring (nicht dargestellt) zwischen dem Deckel 42 und den Ventilelementen montiert werden.

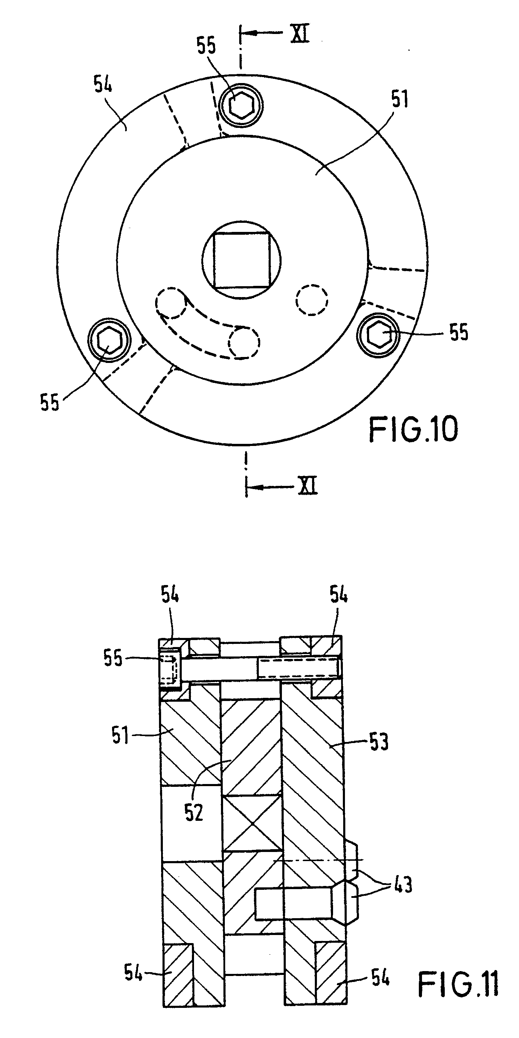

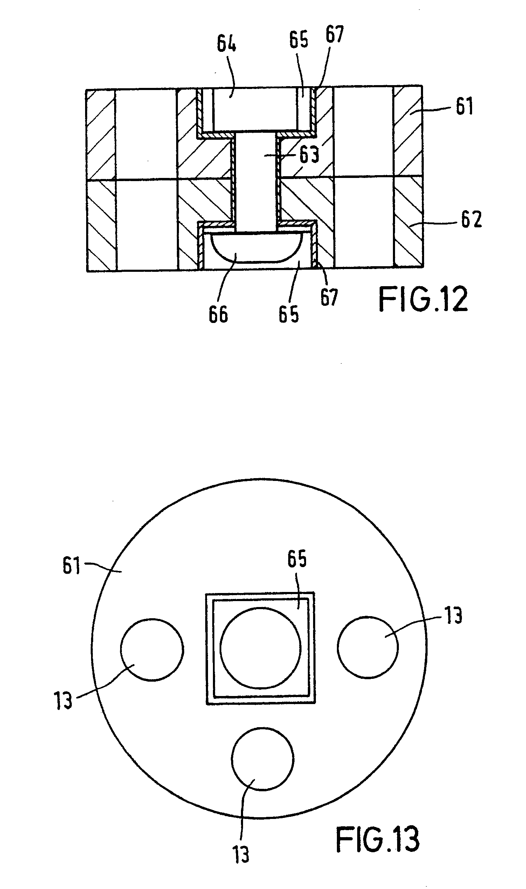

In Fig. 10 und 11 sind Ventilelemente 51, 52,

53 ohne Gehäuse dargestellt. Zwischen den beiden feststehenden Ventilelementen 51, 53 ist das verdrehbare Element 52 angeordnet. Auch diese Ventilelemente bestehen vorzugsweise aus Keramikmaterial. Zur Erzeugung der gewünschten Vorspannung sind in diesem Fall die äußeren Elemente 51, 53 erfindungsgemäß über elastisch kompressible Spannringe 54 und Schrauben 55 miteinander verschraubt. Da das innere Ventilelement 52 einen kleineren Durchmesser als die äußeren Elemente 51, 53 aufweist, ist es frei mittels eines Vierkants 56 drehbar. Die Kanäle des Gehäuses sind in diesem Fall ebenfalls mittels der doppelkonischen Dichtungen 43 gegen die Öffnungen des Ventilelementes 53 abgedichtet.

In Fig. 12 und 13 sind zwei Ventilelemente 61, 62 insbesondere aus Keramik dargestellt, die mittige Bohrungen aufweisen, durch die als Drehachse ein längselastischer Bolzen 63 mit einem Kopf 64 verläuft. Der Kopf 64 sitzt in einer Vertiefung 65 des Ventilelementes 61. Auch das Ventilelement 62 weist eine derartige Vertiefung 65 auf, in der der Bolzen 63 erfindungsgemäß im Ultraschall-Verfahren vernietet ist, wodurch ein Nietkopf 66 entsteht und aufgrund der Längselastizität des Bolzens 63 und/oder der Elastizität des Nietkopfs 66 die geforderte Vorspannung erzeugt wird. Die mittigen Bohrungen und die Vertiefungen 65 der Ventilelemente sind mit einem Lagereinsatz 67 aus Kunststoff versehen.

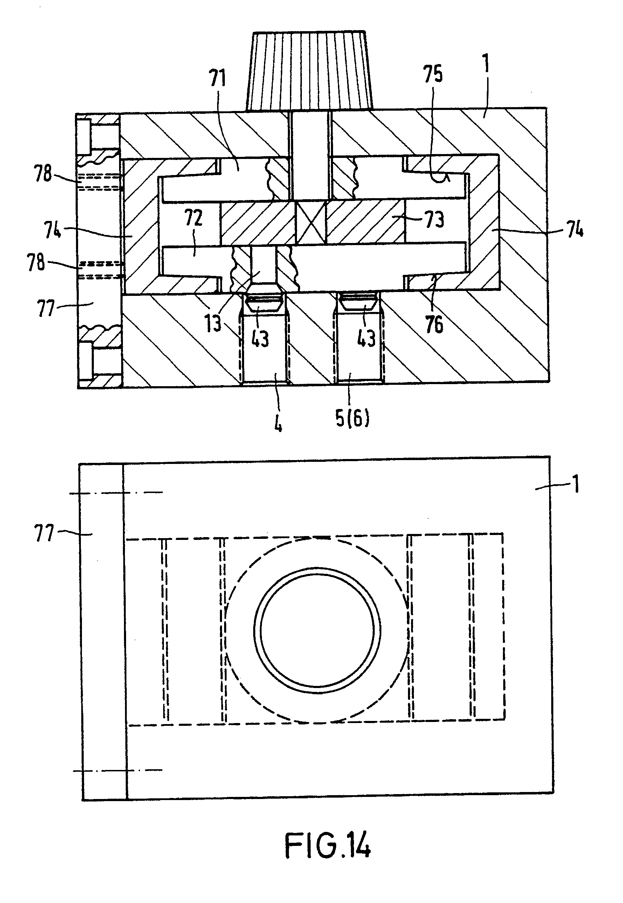

Bei dem Ausführungsbeispiel nach Fig. 14 sind zwei feststehende Keramik-Ventilelemente 71, 72 und ein dazwischen angeordnetes drehbewegliches Ventilelement 73 vorgesehen. Die feststehenden Elemente 71, 72 sind rechteckig ausgebildet und werden an ihren Schmalseiten durch zwei U-förmige Spannklammern 74 zusammengehalten. Zur Einstellung der Höhe der Vorspannung weisen die gegenüberliegenden Innenseiten der freien U-Schenkel der Spannklammern 74 konusartige Schrägflächen 75 auf. Auch die feststehenden Ventilelemente 71, 72 weisen auf ihren den Schmalseiten angrenzenden, voneinander abgekehrten Außenseiten Schrägflächen 76 auf, die an die Schrägflächen 75 der Spannklammern 74 angepaßt sind. Hierdurch kann die Höhe der Vorspannung zwischen den Ventilelementen 71, 72, 73 durch mehr oder weniger weites Aufschieben der Spannklammern 74 auf die äußeren Ventilelemente 71, 72 eingestellt werden. Hierzu ist das Gehäuse 1, in das zunächst eine der Spannklammern 74, dann die Ventilelemente 71, 72, 73 und schließlich die zweite Spannklammer 74 von der Seite, d.h. senkrecht zur Drehachse des Ventilelementes 73, eingeschoben werden, mit einer Verschlußplatte 77 verschlossen, die auf die in Fig.14 linke Spannklammer 74 wirkende Spannschrauben 78 aufweist. Mittels dieser Spannschrauben 78 ist die Höhe der Vorspannung vorteilhafterweise stufenlos einstellbar. Die Gehäusekanäle 4, 5, 6 sind mit den Durchgangsöffnungen 13 des Ventilelementes 72 wiederum über doppelkonusförmige Dichtungen 43 verbunden.

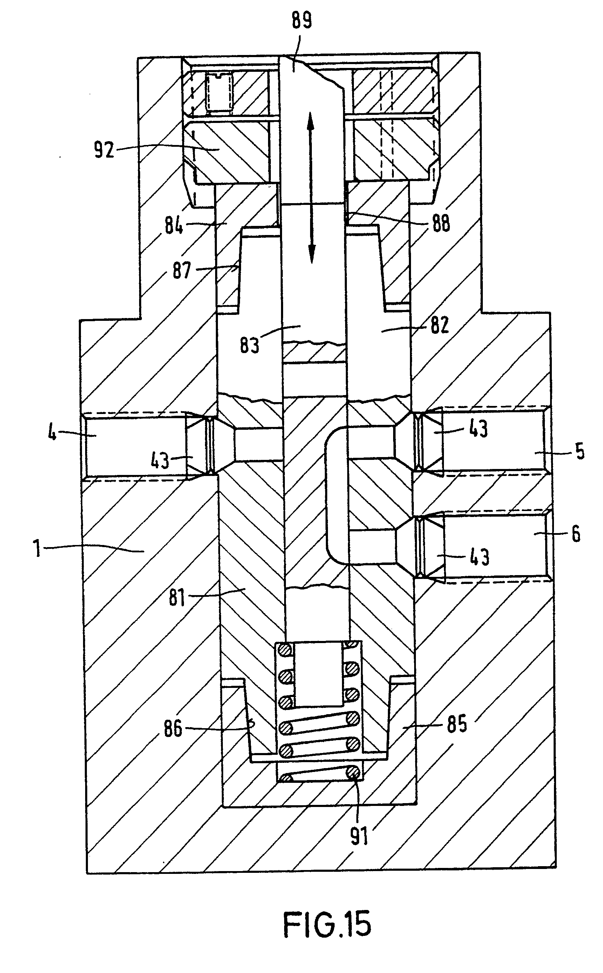

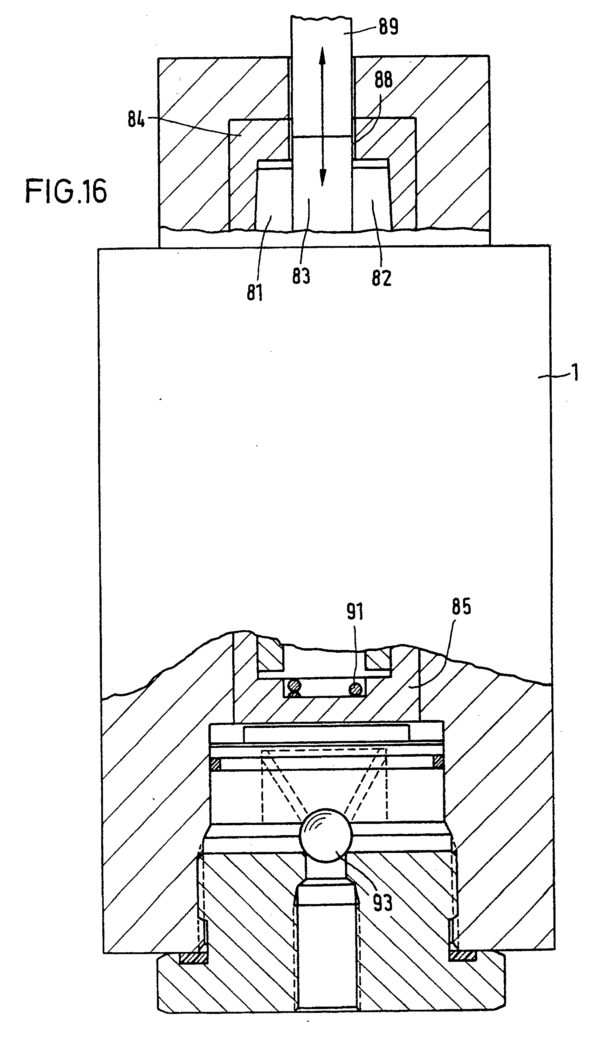

Im Gegensatz zu den bisher beschriebenen Drehschieberventilen sind in Fig. 15 und 16 zwei Ausführungen von Längsschieberventilen dargestellt. Dabei werden zwei feststehende Ventilelemente 81, 82 vorzugsweise aus Keramik mit einem dazwischenliegenden, längsbeweglich (siehe Doppelpfeil) geführten Ventilelement 83 mittels Spannklammern 84,85 zusammengehalten und unter Vorspannung gesetzt. Die Spannklammern 84, 85 und die Schmalseiten der feststehenden Ventilelemente 81, 82 sind analog zu dem Ausführungsbeispiel nach Fig. 14 mit Schrägflächen 86, 87 ausgebildet. Lediglich eine (die in Fig. 15 obere) Spannklammer 84 weist eine mittige Durchgangsöffnung 88 zur Durchführung des beweglichen Ventilelementes 83 bzw. eines Betätigungsschiebers 89 auf. Zur selbsttätigen Rückstellung des Ventils ist eine Spiralfeder 91 zwischen dem beweglichen Ventilelement 83 und der Spannklammer 85 angeordnet. Zur Einstellung der Höhe der Vorspannung zwischen den Ventilelementen 81, 82, 83 ist eine mechanische Feststellung 92 (Fig.15) oder ein hydraulische Feststellung 93 (Fig. 16) vorgesehen, die jeweils die Spannklammern 84 bzw. 85 mehr oder weniger stark auf die Schrägflächen 87 der Ventilelemente 81, 82 pressen. Die Verbindungen zwischen den Gehäusekanälen 4, 5, 6 und den Ventilelementen 81, 82 sind auch hier mittels der bereits behandelten doppelkonischen Dichtungen 43 abgedichtet, die ebenfalls einen Teil zu der gewünschten Vorspannung beitragen können. Um auch bei den nach diesen Ausführungsbeispielen ausgebildeten Ventilen einen progressiven Anstieg der Vorspannung zwischen den Ventilelementen 81, 82, 83 zu erreichen, können zwischen der mechanischen Feststellung 92 bzw. der hydraulischen Feststellung 93 und der jeweiligen Spannklammer 84 bzw. 85 erfindungsgemäß Formelemente (nicht dargestellt) mit unterschiedlicher Form, Größe und/oder Elastizität angeordnet sein. Derartige Formelemente können beispielsweise Kugeln aus verschiedenen Materialien, wie Kunststoff, Gummi usw., mit unterschiedlichen Durchmessern sein. Da bei zunehmendem Druck der Feststellungen 92 bzw. 93 auf die Formelemente zunächst die aus weichem Material bestehenden Formelemente und nachfolgend bei zunehmendem Druck immer härtere Formelemente komprimiert werden, steigt die über die Formelemente an die Spannklammern 84 bzw. 85 weitergegebene Kraft und dadurch auch die Vorspannung zwischen den Ventilelementen 81, 82, 83 progressiv an.

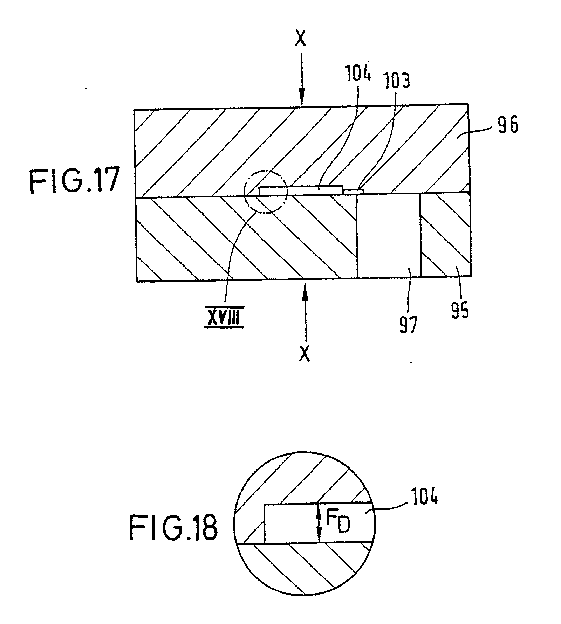

In Fig. 17 und 18 ist ein besonderes Merkmal der Erfindung veranschaulicht. Hierbei wird zwischen den beiden Ventilelementen 95, 96 als Gleitfilm ein Druckluftfilm erzeugt. Hierzu ist zentrisch zur Mittelachse der Elemente am Ventilelement 96 eine Ausnehmung 104 ausgebildet, die über einen Überströmkanal 103 mit der Durchgangsöffnung 97, die den Zuluftkanal bildet, verbunden ist. Aufgrund dieser Ausgestaltung entsteht innerhalb der Ausnehmung 104 ein Überdruck $F_D$, der bewirkt, daß die beiden Ventilelemente 95,96 auseinandergedrückt werden, so daß sich die Druckluft zwischen den Ventilelementen 95, 96 ausbreiten kann und einen Druckluftfilm bildet. Auf diesem Druckluftfilm gleiten dann die beiden Elemente 95, 96 gegeneinander bei einer Verschiebung derselben zueinander. Dabei erfolgt vorzugsweise der Druckabbau vom Mittelpunkt radial nach außen derart, daß am äußeren Rand der Ventilelemente 95, 96 innerhalb des Druckluftfilms Atmosphärendruck herrscht, so daß ein seitliches Entweichen der Druckluft nicht auftritt. Erfindungsgemäß ist dabei wesentlich, daß die beiden Ventilelemente mittels einer Vorspannkraft - wie durch die Pfeile X eingezeichnet - beaufschlagt werden, die der inneren Kraft $F_D$ durch den in der Kammer 104 erzeugten Luftdruck entgegenwirkt. Diese Vorspannkraft ist erfindungsgemäß derart bemessen, daß sie etwas geringer ist als die durch Luftdruck erzeugte Kraft, und über die Größe der Vorspannkraft kann die Ausbildung des Druckluftfilms in der gewünschten Weise gesteuert werden, so daß an der Peripherie der Ventilelemente 95, 96 ein derartiger Druckabbau erfolgt ist, daß dort nur noch atmosphärischer Druck vorhanden ist.

Geeignete Mittel zur Erzeugung der Vorspannkraft sind oben in bezug auf die Fig. 1 bis 16 beschrieben, worauf in vollem Umfange Bezug genommen wird, wobei erfindungsgemäß die Ausbildung der Ventilelemente 95, 96 bei allen Ausführungen der Fig. 1 bis 16 entsprechend eingesetzt ist.

Die vorliegende Erfindung ist nicht auf die gezeigten Ausführungsformen beschränkt. (Z.B.) können die Ventilelemente nicht nur - wie dargestellt - kreisförmig ausgebildet sein, sondern auch rechteckförmig. Auch sind Ausführungsformen möglich, die mehr als zwei Durchtrittsöffnungen besitzen, wie beispielsweise die Ausbildung des erfindungsgemäßen Ventils als 3/2-Wegeventil oder 5/2-Wegeventil.

Das erfindungsgemäße Ventil zeichnet sich durch eine Konstanz der Verstellkräfte auf niedrigem Niveau aus, wobei Antriebskraftveränderungen keinen Einfluß auf die Ventilkraft besitzen. Das erfindungsgemäße Ventil kann einen unmittelbar über ein Kraftübertragungsglied angeschlossenen Antrieb bekannter Bauart im Ventilgehäuse integriert aufweisen. In der Fig. 1 wird das Kraftübertragungsglied z.B. von dem Verdrehelement 15 und in der Fig. 10 durch das Verdrehelement 52 gebildet.

## Ansprüche

1. Schaltventil zur Steuerung pneumatischer Bremsanlagen von Kraftfahrzeugen, bestehend aus einem Gehäuse (1) mit mindestens zwei Eingangs- bzw. Ausgangskanälen (4, 5, 6), wobei in dem Gehäuse (1) mindestens zwei scheibenförmige, mit Durchgangsöffnungen (13) versehene, dichtend aufeinanderliegende, aus Keramik, Kunststoff oder einer Keramik-Kunststoff-Kombination bestehende Ventilelemente (7, 8; 51, 52, 53; 61, 62; 71, 72, 73; 81, 82, 83; 95, 96) derart angeordnet sind, daß sie unter Vorspannung stehend aneinandergepreßt werden, wobei zwischen den dichtend, unter Vorspannung aufeinanderliegenden Ventilelementen (7, 8; 51, 52, 53; 61, 62; 71, 72, 73; 81, 82, 83; 95, 96) eine Ausnehmung (104) ausgebildet ist, die über einen Überströmkanal (103) mit einem Zuluftkanal (97) verbunden ist, so daß in der Ausnehmung (104) ein gegenüber der Vorspannkraft (X) größer bemessener Überdruck ($F_D$) derart erzeugt wird, daß zwischen den aufeinanderliegenden Ventilelementen ein Gleitfilm aus Druckluft ausgebildet ist und am Umfangsrand der Ventilelemente der Druck im Gleitfilm auf Atmosphärendruck abgebaut ist.

2. Ventil nach Anspruch 1,
   **dadurch gekennzeichnet,**
   daß das Gehäuse (1) eine Bohrung (2) aufweist, in deren Bohrungsgrund (3) drei Kanäle (4,5,6) münden und daß in der Bohrung (2) die Ventilelemente (7,8;95,96) den Kanälen (4,5,6) gegenüberliegend angeordnet sind.

3. Ventil nach Anspruch 2,
   **dadurch gekennzeichnet,**
   daß das den Kanälen (4,5,6) nächstliegende Ventilelement (7) verdrehsicher in der Bohrung (2) gelagert ist.

4. Ventil nach Anspruch 2 oder 3,
   **dadurch gekennzeichnet,**
   daß zwischen dem Ventilelement (7) und dem Bohrungsgrund (3) eine die Kanäle (4,5,6) umgebende, die Vorspannung erzeugende Profildichtung (22) aus einem elastischen Material, insbesondere Gummi, in einer in dem Bohrungsgrund (3) ausgebildeten Nut (23) angeordnet ist.

5. Ventil nach Anspruch 4,
   **dadurch gekennzeichnet,**

daß die Profildichtung (22) in entspanntem Zustand eine größere Höhe (a) als die Tiefe der Nut (23) aufweist.

6. Ventil nach einem oder mehreren der Ansprüche 1 bis 5,
   **dadurch gekennzeichnet,**
   daß die Kanäle (4,5,6) sowie die Durchgangsöffnungen (13) der Ventilelemente (7,8) den Querschnitt von Kreissegmenten, insbesondere Viertelkreissegmenten, aufweisen.

7. Ventil nach einem oder mehreren der Ansprüche 4 bis 6,
   **dadurch gekennzeichnet,**
   daß die Profildichtung (22) einen alle Kanäle (4,5,6) gemeinsam umgebenden, ringförmigen Teil sowie mit diesem einstückige, radial nach innen angeordnete, die Kanäle (4,5,6) einzeln umgebende Teile aufweist, wobei die radial nach innen verlaufenden Teile der Profildichtung (22) gleichmäßig auf der Fläche des Bohrungsgrundes (3) verteilt angeordet sind.

8. Ventil nach einem oder mehreren der Ansprüche 4 bis 7,
   **dadurch gekennzeichnet,**
   daß die Profildichtung (22a) im Querschnitt etwa rechteckig ausgebildet ist, wobei zwei einander diagonal gegenüberliegende Eckkanten (31) abgerundet sind.

9. Ventil nach einem oder mehreren der Ansprüche 4 bis 8,
   **dadurch gekennzeichnet,**
   daß die Profildichtung (22a) derart in der Nut (23) angeordnet ist, daß auf der oberen, offenen Seite der Nut (23) eine abgerundete Eckkante des ringförmigen Teiles der Profildichtung (22a) auf der Innenseite der Nut (23) angeordnet ist.

10. Ventil nach einem oder mehreren der Ansprüche 4 bis 7,
    **dadurch gekennzeichnet,**
    daß die Profildichtung (22b) den Querschnitt eines Sechsecks aufweist, das in Richtung einer durch zwei gegenüberliegende Eckkanten verlaufenden Linie langgestreckt ist.

11. Ventil nach einem oder mehreren der Ansprüche 4 bis 10,
    **dadurch gekennzeichnet,**
    daß das Verhältnis von Höhe (a) zu Breite (b) der entspannten Profildichtung (22) etwa 2 zu 1 und das Verhältnis von Höhe (a) der entspannten Profildichtung (22) zur Tiefe der Nut (23) 3 zu 2 beträgt.

12. Ventil nach einem oder mehreren der Ansprüche 4 bis 11,
    **gekennzeichnet durch**
    einen das verdrehsichere Ventilelement (7) über das drehbewegliche Ventilelement (8) und ein Verdrehelement (15) gegen die Profildichtung (22) pressenden Druckring (24), der mit dem Gehäuse (1) ultraschallverschweißt ist.

13. Ventil nach einem oder mehreren der Ansprüche 1 bis 5,
    **dadurch gekennzeichnet,**
    daß die Kanäle (4,5,6) sowie die Durchgangsöffnungen (13) der Ventilelemente (7,8) kreisförmigen Querschnitt aufweisen.

14. Ventil nach einem oder mehreren der Ansprüche 1 bis 3 sowie 13,
    **dadurch gekennzeichnet,**
    daß zwischen den Durchgangsöffnungen (13) des Ventilelementes (7) und den Kanälen (4,5,6) zur Erzeugung der Vorspannung doppelkonusförmige Dichtungen (43) aus einem elastischen Material, insbesondere Gummi, mit axialen Durchgangsöffnungen (44) angeordnet sind.

15. Ventil nach Anspruch 14,
    **dadurch gekennzeichnet,**
    daß jede doppelkonusförmige Dichtung (43) mit jeweils einem Konus in den angesenkten Kanälen (4,5,6) des Gehäuses (1) und in den Öffnungen (13) des Ventilelementes (7) sitzt.

16. Ventil nach Anspruch 14 oder 15,
    **dadurch gekennzeichnet,**
    daß jede Dichtung (43) im mittleren Bereich ihres Umfangs eine Einschnürung (44) und/oder auf den Umfangsflächen beider Konusabschnitte umlaufende, sich radial nach außen erstreckende Zungen (46) aufweist.

17. Ventil nach einem oder mehreren der Ansprüche 2 bis 16,
    **dadurch gekennzeichnet,**
    daß das Gehäuse (1) auf der Öffnungsseite der Bohrung (2) durch einen Deckel (42) verschlossen ist, wobei zwischen dem Deckel (42) und den Ventilelementen (7,8) eine die Vorspannung erzeugende Tellerfeder (41) angeordnet ist.

18. Ventil nach Anspruch 1,
    **dadurch gekennzeichnet,**
    daß zwischen zwei in dem Gehäuse (1) verdrehsicher gelagerten Ventilelementen (51,53) ein Ventilelement (52) drehbar gelagert ist, wobei die verdrehsicher gelagerten Ventilelemente (51,53) zur Erzeugung der Vorspannung über elastisch kompressible Spannringe (54) und Schrauben (55) in ihrem Randbereich miteinander verschraubt sind.

19. Ventil nach Anspruch 18,
**dadurch gekennzeichnet,**
daß der Durchmesser des drehbeweglichen Ventilelementes (52) kleiner ist als der Durchmesser der Spannringe (54).

20. Ventil nach Anspruch 1,
**dadurch gekennzeichnet,**
daß die Ventilelemente (61,62) mittige Durchgangsbohrungen aufweisen, durch die als Drehachse ein Bolzen (63) verläuft, der einseitig einen Kopf (64) aufweist und anderseitig im Ultraschall-Verfahren zu einem Nietkopf (66) vernietet ist, wobei der Kopf (64) und der Nietkopf (66) in Vertiefungen (65) der Ventilelemente (61,62) sitzen und der Bolzen (63) zur Erzeugung der Vorspannung aus längselastischem Material besteht.

21. Ventil nach Anspruch 20,
**dadurch gekennzeichnet,**
daß die mittigen Durchgangsbohrungen sowie die Vertiefungen (65) der Ventilelemente (61,62) einen Lagereinsatz (67) aus Kunststoff aufweisen.

22. Ventil nach Anspruch 1,
**dadurch gekennzeichnet,**
daß zwischen zwei in dem Gehäuse (1) verdrehsicher gelagerten Ventilelementen (71,72) ein Ventilelement (73) drehbar gelagert ist, wobei die verdrehsicher gelagerten Ventilelemente (71,72) rechteckig ausgebildet sind und an ihren Schmalseiten durch zwei die Vorspannung erzeugende, U-förmige Spannklammern (74) zusammengehalten werden.

23. Ventil nach Anspruch 1,
**dadurch gekennzeichnet,**
daß zwischen zwei in dem Gehäuse (1) ortsfest gelagerten rechteckigen Ventilelementen (81,82) ein Ventilelement (83) längsverschieblich geführt ist, wobei die orstfesten Ventilelemente an ihren Schmalseiten durch zwei die Vorspannung erzeugende, U-förmige Spannklammern (84,85) zusammengehalten werden.

24. Ventil nach Anspruch 22 und/oder 23,
**dadurch gekennzeichnet,**
daß die Spannklammern (74;84,85) auf den gegenüberliegenden Innenseiten ihrer freien U-Schenkel konusartige Schrägflächen (75;86) aufweisen, die mit entsprechenden Schrägflächen (76;87) auf den den Schmalseiten angrenzenden, voneinander abgekehrten Außenseiten der Ventilelemente (71,72; 81,82) zur Einstellbarkeit der Höhe der Vorspannung zusammenwirken.

25. Ventil nach Anspruch 22 und/oder 24,
**dadurch gekennzeichnet,**
daß das Gehäuse (1) eine seitliche, senkrecht zur Drehachse des Ventilelementes (73) angeordnete Öffnung zum seitlichen Einschieben der Spannklammern (74) und der Ventilelemente (71,72,72) aufweist, die durch eine Verschlußplatte (77) verschließbar ist, wobei die Verschlußplatte (77) Spannschrauben (78) aufweist, die zur Einstellung der Vorspannung zwischen den Ventilelementen (71,72,73) auf die der seitlichen Gehäuseöffnung nächstliegende Spannklammer (74) wirken.

26. Ventil nach Anspruch 23 und/oder 24,
**dadurch gekennzeichnet,**
daß eine der Spannklammern (84,85) in ihrem waagerechten U-Schenkel eine mittige Durchgangsöffnung (88) zur Durchführung des beweglichen Ventilelementes (83) bzw. eines nach außen aus dem Gehäuse (1) ragenden Betätigungsschiebers (89) aufweist.

27. Ventil nach einem oder mehreren der Ansprüche 23, 24, 26,
**dadurch gekennzeichnet,**
daß die Höhe der Vorspannung zwischen den Ventilelementen (81,82,83) mittels einer die Spannklammern (84,85) auf die Schrägflächen (87) der Ventilelemente (81,82) drückenden mechanischen Feststellung (92) oder hydraulischen Feststellung (93) einstellbar ist.

28. Ventil nach Anspruch 27,
**dadurch gekennzeichnet,**
daß zwischen der mechanischen Feststellung (92) bzw. der hydraulischen Feststellung (93) und den Spannklammern (84 bzw. 85) Formelemente mit unterschiedlicher Form, Größe und/oder Elastizität angeordnet sind.

29. Ventil nach einem oder mehreren der Ansprüche 1 bis 28,
**dadurch gekennzeichnet,**
daß mindestens eines der Ventilelemente (7,8; 51,52,53;61,62;71,72;81,82,83;95,96) mit einem Kraftübertragungskörper form- und/oder kraftschlüssig verbunden ist, an dem ein Antriebselement angreift.

30. Ventil nach Anspruch 29,
**dadurch gekennzeichnet,**

daß das Antriebselement Teil eines mechanischen Getriebe-Antriebs ist.

31. Ventil nach Anspruch 29,
**dadurch gekennzeichnet,**
daß das Antriebselement mit einem Elektromagneten betätigt wird.

32. Ventil nach Anspruch 29,
**dadurch gekennzeichnet,**
daß das Antriebselement Teil einer Kipphebelanordnung ist, die über Druckzylinder betätigt wird.

33. Ventil nach Anspruch 29,
**dadurch gekennzeichnet,**
daß das Antriebselement mit einem Gleichstrommotor verbunden ist.

## Claims

1. On-off valve for controlling pneumatic braking devices of motor vehicles, consisting of a housing (1) with at least two input, respectively output channels (4, 5, 6), wherein at least two disk-like valve elements (7, 8: 51, 52, 53; 61, 62; 71, 72, 73; 81, 82, 83; 95, 96) composed of ceramic, plastics material or a ceramic-plastics combination, lying one on top of another in a sealing-tight manner and provided with through-apertures (13) are so mounted in the housing (1) that they are pressed together under initial tension, and between the valve elements (7, 8: 51, 52, 53; 61, 62; 71, 72, 73; 81, 82, 83; 95, 96) lying one on top of another in a sealing-tight manner under initial tension a recess (104) is formed, which communicates with an air supply channel (97) via an overflow channel (103), so that high pressure ($F_D$) greater than the initial tension strength (X) is so generated in the recess (104) that a sliding film of compressed air is formed between the valve elements lying one on top of the other, and at the circumferential edge of the valve elements the pressure in the sliding film is reduced to atmospheric pressure.

2. Valve according to claim 1, characterised in that the housing (1) has a bore (2), into the bottom (3) of which three channels (4, 5, 6) open out, and in that the valve elements (7, 8; 95, 96) are located in the bore (2) opposite the channels (4, 5, 6).

3. Valve according to claim 2, characterised in that the valve element (7) closest to the channels (4, 5, 6) is mounted non-rotatably in the bore (2).

4. Valve according to claim 2 or 3, characterised in that a profile seal (22) composed of a resilient material, in particular rubber, which generates the initial tension and surrounds the channels (4, 5, 6), is mounted between the valve element (7) and the bottom (3) of the bore in a groove (23) formed in the bottom (3) of the bore.

5. Valve according to claim 4, characterised in that the profile seal (22) in the unstressed state has a greater height (a) than the depth of the groove (23).

6. Valve according to one or more of claims 1 to 5, characterised in that the channels (4, 5, 6) and the through-apertures (13) of the valve elements (7, 8) have the cross-section of segments of a circle, in particular quarter-circle segments.

7. Valve according to one or more of claims 4 to 6, characterised in that the profile seal (22) has an annular part surrounding all channels (4, 5, 6) together and, integral with this part and mounted radially inwards, parts surrounding the channels (4, 5, 6) individually, and the parts of the profile seal (22) extending radially inwards are evenly distributed on the face of the bottom (3) of the bore.

8. Valve according to one or more of claims 4 to 7, characterised in that the profile seal (22a) is approximately rectangular in cross-section and two diagonally opposite corner edges (31) are rounded.

9. Valve according to one or more of claims 4 to 8, characterised in that the profile seal (22a) is so mounted in the groove (23) that on the upper, open side of the groove (23) a rounded corner edge of the annular part of the profile seal (22a) is located on the inside of the groove (23).

10. Valve according to one or more of claims 4 to 7, characterised in that the profile seal (22b) has the cross-section of a hexagon which is elongated in the direction of a line running through two opposite corner edges.

11. Valve according to one or more of claims 4 to 10, characterised in that the ratio of height (a) to width (b) of the unstressed profile seal (22) is approximately 2 to 1, and the ratio of the height (a) of the unstressed profile seal (22) to the depth of the groove (23) is 3 to 2.

12. Valve according to one or more of claims 4 to 11, characterised by a pressure ring (24), which presses the non-rotatable valve element (7) via the rotatable valve element (8) and a rotary element (15) against the profile seal (22) and is welded by ultrasound to the housing (1).

13. Valve according to one or more of claims 1 to 5, characterised in that the channels (4, 5, 6) and the through-apertures (13) of the valve elements (7, 8) have a circular cross-section.

14. Valve according to one or more of claims 1 to 13, characterised in that in order to generate the initial tension, double-conical seals (43) composed of a resilient material, in particular rubber, with axial through-apertures (44) are mounted between the through-apertures (13) of the valve element (7) and the channels (4, 5, 6).

15. Valve according to claim 14, characterised in that each double-conical seal (43) rests with a respective cone in the countersunk channels (4, 5, 6) of the housing (1) and in the apertures (13) of the valve element (7).

16. Valve according to claim 14 or 15, characterised in that each seal (43) has in the central region of its circumference a neck (44) and/or tongues (46) extending radially outwards and extending around the circumferential faces of both cone sections.

17. Valve according to one or more of claims 2 to 16, characterised in that the housing (1) is closed on the aperture side of the bore (2) by a cover (42), and a cup spring (41) for generating the initial tension is mounted between the cover (42) and the valve elements (7, 8).

18. Valve according to claim 1, characterised in that a valve element (52) is rotatably mounted between two valve elements (51, 53) mounted non-rotatably in the housing (1), and the non-rotatably mounted valve elements (51, 53), in order to generate the initial tension, are screwed together at their edge by resiliently compressible tension rings (54) and screws (55).

19. Valve according to claim 18, characterised in that the diameter of the rotatable valve element (52) is smaller than the diameter of the tension rings (54).

20. Valve according to claim 1, characterised in that the valve elements (61, 62) have central through-bores, through which a bolt (63) passes as a rotary shaft, which on the one side has a head (64) and on the other side is riveted to a rivet head (66) by the ultrasound process, and the head (64) and the rivet head (66) rest in hollows (65) in the valve elements (61, 62) and the bolt (63) consists of stretchable material in order to generate the initial tension.

21. Valve according to claim 20, characterised in that the central through-bores and the hollows (65) of the valve elements (61, 62) have a plastics bearing insert (67).

22. Valve according to claim 1, characterised in that a valve element (73) is rotatably mounted between two valve elements (71, 72) mounted non-rotatably in the housing (1), the non-rotatably mounted valve elements (71, 72) being rectangular and being held together at their narrow sides by two U-shaped clamping braces (74) for generating the initial tension.

23. Valve according to claim 1, characterised in that a valve element (83) is guided longitudinally displaceably between two rectangular valve elements (81, 82) mounted rigidly in the housing (1), the rigidly mounted valve elements being held together at their narrow sides by two U-shaped clamping braces (84, 85) for generating the initial tension.

24. Valve according to claim 22 and/or 23, characterised in that the clamping braces (74; 84, 85) have on the opposite inner sides of their free U-flanges cone-like oblique faces (75; 86), which co-operate with corresponding oblique faces (76; 87) on the mutually remote outer sides of the valve elements (71, 72; 81, 82) defining the narrow sides, in order to adjust the level of initial tension.

25. Valve according to claim 22 and/or 24, characterised in that the housing (1) has a lateral aperture, arranged perpendicular to the axis of rotation of the valve element (73), for the lateral insertion of the clamping braces (74) and of the valve elements (71, 72, 73), which aperture is closable by a closing plate (77), the closing plate (77) having clamping screws (78) which, to adjust the initial tension between the valve elements (71, 62, 73), act on the clamping brace (74) lying closest to the lateral housing aperture.

26. Valve according to claim 23 and/or 24, characterised in that one of the clamping braces (84, 85) has in its horizontal U-flange a central through-aperture (88) for guiding through of the movable valve element (83) or of an actuating slide (89) projecting out of the housing (1).

27. Valve according to one or more of claims 23, 24, 26, characterised in that the level of initial tension between the valve elements (81, 82, 83) is adjustable by means of a mechanical fixing device (92) or hydraulic fixing device (93) pressing the clamping braces (84, 85) on to the oblique faces (87) of the valve elements (81, 82).

28. Valve according to claim 27, characterised in that form elements with a different shape, size and/or elasticity are mounted between the mechanical fixing device (92) or respectively hydraulic fixing device (93) and the clamping braces (84 and 85 respectively).

29. Valve according to one or more of claims 1 to 28, characterised in that at least one of the valve elements (7, 8: 51, 52, 53; 61, 62; 71, 72; 81, 82, 83; 95, 96) is connected with positive and/or non-positive locking to a power transmission body, on which a drive element acts.

30. Valve according to claim 29, characterised in that the drive element is part of a mechanical transmission drive.

31. Valve according to claim 29, characterised in that the drive element is actuated with an electromagnet.

32. Valve according to claim 29, characterised in that the drive element is part of a rocker arm mechanism, which is actuated via pressure cylinders.

33. Valve according to claim 29, characterised in that the drive element is connected to a direct current motor.

**Revendications**

1. Soupape pour commander les systèmes de freinage pneumatiques de véhicules à moteur, comprenant un boîtier (1) avec au moins deux canaux d'entrée ou de sortie (4, 5, 6), au moins deux éléments de soupape (7, 8 ; 51, 52, 53 ; 61, 62 ; 71, 72, 73 ; 81, 82, 83 ; 95, 96) qui présentent la forme de disques, qui possèdent des ouvertures de passage (13), qui sont appliqués l'un sur l'autre de manière étanche, qui sont réalisés dans une céramique, une matière synthétique ou dans une combinaison céramique/matière synthétique et qui sont agencés de manière à être poussés l'un contre l'autre sous une précontrainte, un évidement (104) étant ménagé entre les éléments de soupape (7, 8 ; 51, 52, 53 ; 61, 62 ; 71, 72, 73 ; 81, 82, 83 ; 95, 96) appliqués l'un sur l'autre de manière étanche sous une précontrainte, cet évidement étant relié, au moyen d'un canal d'admission (103) à un canal d'amenée d'air (97) de manière à engendrer dans l'évidement (104) une surpression ($F_D$), supérieure à la force de précontrainte (X), telle qu'il se forme, entre les éléments de soupape appliqués l'un sur l'autre, un film de glissement fait d'air comprimé et que le long du bord circonférentiel des éléments de soupape, la pression dans le film de glissement soit réduite à la pression atmosphérique.

2. Soupape selon la revendication 1, caractérisée par le fait que le boîtier (1) présente un alésage (2) dans le fond (3) duquel débouchent trois canaux (4, 5, 6) et que les éléments de soupape (7, 8 ; 95, 96) sont disposés dans l'alésage (2) en regard des canaux (4, 5, 6).

3. Soupape selon la revendication 2, caractérisée par le fait que l'élément de soupape (7) le plus proche des canaux (4, 5, 6) est monté dans l'alésage (2) de manière à n'être soumis à aucune torsion.

4. Soupape selon la revendication 2 ou 3, caractérisée par le fait qu'entre l'élément de soupape (7) et le fond (3) de l'alésage, un joint profilé (22) en une matière flexible, en particulier en caoutchouc, est disposé dans une rainure (23) formée dans le fond (3), ce joint entourant les canaux (4, 5, 6) et engendrant la précontrainte.

5. Soupape selon la revendication 4, caractérisée par le fait que le joint profilé (22) possède, dans son état détendu, une hauteur (a) supérieure à la profondeur de la rainure (23).

6. Soupape selon l'une ou plusieurs des revendications 1 à 5, caractérisée par le fait que les section transversales des canaux (4, 5, 6), ainsi que des ouvertures de passage (13) des éléments de soupape (7, 8) sont des segments de cercles, en particulier des quarts de cercles.

7. Soupape selon l'une ou plusieurs des revendications 4 à 6,

caractérisée par le fait que le joint profilé (22) présente une pièce annulaire entourant tous les canaux (4, 5, 6) à la fois, ainsi que des éléments venus de matière avec cette pièce, disposés radialement vers l'intérieur et entourant individuellement les canaux (4, 5, 6), les éléments du joint profilé (22) qui s'étendent radialement vers l'intérieur étant répartis uniformément sur la surface du fond (3) de l'alésage.

8. Soupape selon l'une ou plusieurs des revendications 4 à 7,
caractérisée par le fait que la section transversale du joint profilé (22) est sensiblement rectangulaire, deux bords angulaires (31) disposés diagonalement en regard, étant arrondis.

9. Soupape selon l'une ou plusieurs des revendications 4 à 8,
caractérisée par le fait que le joint profilé (22a) est disposé dans la rainure (23) de manière telle que, du côté supérieur ouvert de la rainure (23), un bord angulaire arrondi de la pièce annulaire du joint profilé (22a) soit disposé sur la face intérieure de la rainure (23).

10. Soupape selon l'une ou plusieurs des revendications 4 à 7,
caractérisée par le fait que la section transversale du joint profilé (22b) a la forme d'un hexagone allongé dans la direction d'une ligne qui passe par deux bords angulaires en regard.

11. Soupape selon l'une ou plusieurs des revendications 4 à 10,
caractérisée par le fait que le rapport hauteur (a) - largeur (b) du joint profilé (22) détendu est d'environ 2 à 1 et que la hauteur (a) du joint profilé détendu (22) par rapport à la profondeur de rainure (23) est de 3 à 2.

12. Soupape selon l'une ou plusieurs des revendications 4 à 11,
caractérisée par un anneau de pression (24) poussant l'élément de soupape (7) monté de manière à être à l'abri des torsions au moyen de l'élément de soupape (8) mobile en rotation, ainsi qu'un élément de torsion (15), contre le joint profilé (22), ce joint de pression étant soudé au boîtier (1) par ultrasons.

13. Soupape selon l'une ou plusieurs des revendications 1 à 5,
caractérisée par le fait que la section transversale des canaux (4, 5, 6), ainsi que des ouvertures de passage (13) des éléments de soupape (7, 8) est circulaire.

14. Soupape selon l'une ou plusieurs des revendications 1 à 3 et 13,
caractérisée par le fait qu'entre les ouvertures de passage (13) de l'élément de soupape (7) et les canaux (4, 5, 6) sont disposés des joints (43) en une matière flexible, en particulier en caoutchouc, ayant la forme d'un cône double et munis d'ouvertures de passage (44) pour engendrer la précontrainte.

15. Soupape selon la revendication 14,
caractérisée par le fait que respectivement un cône de chaque joint (43) en forme d'un cône double est placé dans les canaux chanfreinés (4, 5, 6) du boîtier (1) et dans les ouvertures (13) de l'élément de soupape (7).

16. Soupape selon la revendication 14 ou 15,
caractérisée par le fait que chaque joint (43) possède dans la région centrale de sa circonférence un étranglement (44) et/ou des languettees (46) suivant la circonférence des deux sections coniques et s'étendant radialement vers l'extérieur.

17. Soupape selon l'une ou plusieurs des revendications 2 à 16,
caractérisée par le fait que le boîtier (1) est fermé sur le côté d'ouverture de l'alésage (2) par un capot (42), une rondelle-ressort (41) étant disposée entre le capot (42) et les éléments de soupape (7, 8) pour engendrer une précontrainte.

18. Soupape selon la revendication 1,
caractérisée par le fait qu'entre deux éléments de soupape (51, 53), montés pour être à l'abri de torsions dans le boîtier (1), un élément de soupape (52) est monté rotatif, les bords des éléments de soupape (51, 53) montés fixes étant reliés par vissage au moyen d'anneaux de tension (54) et de vis (55) élastiquement compressibles, en vue d'engendrer une précontrainte.

19. Soupape selon la revendication 18,
caractérisée par le fait que le diamètre de l'élément de soupape (52) qui est mobile en rotation est inférieur au diamètre des anneaux de tension (54).

20. Soupape selon la revendication 1,
caractérisée par le fait que les éléments de soupape (61, 62) possèdent des alésages traversants centraux, à travers lesquels passe un boulon (63) qui sert d'axe de rotation et qui présente d'un côté une tête (64) et de l'autre côté duquel est formée par un procédé à ultrasons une tête de rivet (66), la tête (64) et la tête de rivet (66) étant placées dans des creux (65) des éléments de soupape (61, 62) et le boulon (63) étant réalisé en une matière flexible longitudinalement pour engendrer une précontrainte.

21. Soupape selon la revendication 20, caractérisée par le fait que les alésages traversants centraux, ainsi que les creux (65) des éléments de soupape (61, 62) possèdent une garniture (67) en matière synthétique.

22. Soupape selon la revendication 1, caractérisée par le fait qu'entre deux éléments de soupape (71, 72) montés pour être à l'abri de torsions dans le boîtier (1), un élément de soupape (73) est monté rotatif, les éléments de soupape (71, 72) montés fixes étant rectangulaires et étant maintenus ensembles par leurs petits côtés au moyen de deux étriers de tension en U (74) engendrant la précontrainte.

23. Soupape selon la revendication 1, caractérisée par le fait qu'entre deux éléments de soupape (81, 82) rectangulaires montés de manière fixe un élément de soupape (83) est monté longitudinalement coulissant, les éléments de soupape stationnaires étant maintenus ensembles par leurs petits côtés au moyen de deux étriers de tension (84, 85) en U qui engendrent la précontrainte.

24. Soupape selon la revendication 22 et/ou 23, caractérisée par le fait que les étriers de tension (74, 84, 85) possèdent sur les faces intérieures en regard des branches libres du U des faces inclinées coniques (75 ; 86) qui coopèrent avec des faces inclinées (76 ;87) correspondantes prévues sur les faces extérieures opposées et adjacentes aux petits côtés des éléments de soupape (71, 72 ; 81, 82), en vue de régler la hauteur de la précontrainte.

25. Soupape selon la revendication 22 et/ou 24, caractérisée par le fait que le boîtier (1) possède une ouverture latérale, disposée perpendiculairement par rapport à l'axe de rotation de l'élément de soupape (73), pour introduire latéralement les étriers de tension (74) et les éléments de soupape (71, 72, 73), cette ouverture pouvant être fermée par une plaque (77), cette plaque de fermeture (77) possédant des vis de tension (78) qui agissent sur l'étrier de tension (74) le plus proche de l'ouverture latérale du boîtier, en vue de régler la précontrainte entre les éléments de soupape (71, 72, 73).

26. Soupape selon la revendication 23 et/ou 24, caractérisée par le fait qu'un des étriers de tension (84, 85) possède, dans la branche horizontale du U, une ouverture centrale (88) pour le passage de l'élément de soupape mobile (83) ou d'un coulisseau d'actionnement (89) faisant saillie vers l'extérieur du boîtier (1).

27. Soupape selon l'une ou plusieurs des revendications 23, 24, 26, caractérisée par le fait que la hauteur de la précontrainte entre les éléments de soupape (81, 82, 83) peut être réglée au moyen d'un dispositif d'arrêt mécanique (92) ou hydraulique (93) qui pousse les étriers de tension (84, 85) contre les faces inclinées (87) des éléments de soupape (81, 82).

28. Soupape selon la revendication 27, caractérisée par le fait qu'entre les dispositifs d'arrêt mécanique (92) ou hydraulique (93) et les étriers de tension (84, respectivement 85) des éléments moulés de forme, taille et/ou de flexibilité différente sont disposés.

29. Soupape selon l'une ou plusieurs des revendications 1 à 28, caractérisée par le fait qu'au moins un des éléments de soupape (7, 8 ; 51, 52, 53 ; 61, 62 ; 71, 72 ; 81, 82, 83 ; 95, 96) est relié mécaniquement et/ou par adhérence à un corps de transmission de l'effort, attaqué par un élément d'entraînement.

30. Soupape selon la revendication 29, caractérisée par le fait que l'élément d'entraînement fait partie d'un entraînement mécanique par transmissions.

31. Soupape selon la revendication 29, caractérisée par le fait que l'élément d'entraînement est actionné par un électroaimant.

32. Soupape selon la revendication 29, caractérisée par le fait que l'élément d'entraînement fait partie d'un agencement à leviers basculants actionné par des vérins.

33. Soupape selon la revendication 29, caractérisée par le fait que l'élément d'entraînement est relié à un moteur à courant continu.

**FIG.1**

**FIG.2**

FIG.3

FIG.4

FIG.5

FIG.6

FIG.7

FIG.8

FIG.9

FIG.10

FIG.11

FIG.12

FIG.13

FIG.14

FIG.15

FIG.16

FIG.17

FIG.18